# EUROPÄISCHE PATENTSCHRIFT

(11) **EP 1 228 128 B1**
(45) Veröffentlichungstag und Bekanntmachung des Hinweises auf die Patenterteilung: **26.11.2003**
(21) Anmeldenummer: 00956418.8
(22) Anmeldetag: 10.08.2000
(51) Int. Cl.: C08K 3/24, C08K 3/38, B22C 1/22

(54) **ALUMINIUM- UND BORHALTIGES BINDEMITTELSYSTEM AUF RESOLBASIS**
RESOL BASED BINDING AGENT CONTAINING ALUMINIUM AND BORON
SYSTEME DE LIANT A BASE DE RESOL, CONTENANT DE L'ALUMINIUM ET DU BORE

(30) Priorität: 12.08.1999 DE 19938043
(43) Veröffentlichungstag der Anmeldung: 07.08.2002
(73) Patentinhaber: Ashland-Südchemie-Kernfest GmbH, 40721 Hilden (DE)
(72) Erfinder: KOCH, Diether, D-40822 Mettmann (DE); SCHWAACK, Hans-Jürgen, D-46446 Emmerich (DE)
(74) Vertreter: VOSSIUS & PARTNER
(86) Internationale Anmeldenummer: EP0007775
(87) Internationale Veröffentlichungsnummer: WO01012709

(56) Entgegenhaltungen:
- EP-A- 0 323 096
- EP-A- 0 508 566
- GB-A- 2 253 627

## Beschreibung

Die vorliegende Erfindung betrifft Bindemittelsysteme auf Resolbasis, die u.a. verbesserte Endfestigkeit aufweisen.

In der europäischen Patentschrift EP-A-0 323 096 wird ein alkalisches Resolharz beschrieben, das zur Herstellung von Kernen und Formen in der Gießereiindustrie eingesetzt werden kann, wobei die Aushärtung des Harzes durch Einleiten von CO₂ erfolgt.

Die Festigkeiten der auf diese Weise hergestellten Kerne liegen jedoch, trotz erhöhter Bindemittelzugaben, unterhalb der Festigkeiten von Kernen, die mittels anderer Gashärtungsverfahren hergestellt werden (z. B. mittels des Polyurethan-Cold-Box-Verfahrens oder des Epoxy-SO₂-Verfahrens). Dadurch wird die Anwendbarkeit dieses sogenannten Resol-CO₂-Verfahrens im wesentlichen auf massive, einfache Kerne begrenzt.

Auf der anderen Seite erhält man trotz der niedrigen Festigkeiten Gußstücke von sehr guter Qualität. Für eine weitere Verbreitung des Resol-CO₂-Verfahrens wäre es daher wünschenswert, Bindemittel zur Verfügung zu haben, mit denen man Formkörper mit höheren Festigkeiten herstellen kann.

Ein wesentlicher Bestandteil des in EP-A-0 323 096 beschriebenen Bindemittels ist ein Oxyanion, vorzugsweise das Borat-Ion. Dieses Oxyanion soll, wenn durch Einleiten von CO₂ der pH-Wert des Resols erniedrigt wird, mit dem Phenolharz einen stabilen Komplex bilden, was zur Aushärtung des Bindemittels führt.

Als Alternative zu den Boraten werden in EP-A-0 323 096 das Stannat- und das Aluminat-Ion genannt. Bei genauer Durchsicht der experimentellen Daten stellt man fest, daß die Festigkeiten der Formulierungen, die Stannate oder Aluminate enthalten, deutlich niedriger sind als die der borathaltigen Formulierungen. Dies gilt in besonderem Maße für das Aluminat. Eigene Untersuchungen mit Aluminat bestätigen diesen Befund.

Es besteht ein wachsendes Interesse, den Anwendungsbereich des Resol-CO₂-Verfahrens zu erweitern. Es war daher Aufgabe der vorliegenden Erfindung ein Bindemittelsystem für das Resol-CO₂-Verfahren zur Verfügung zu stellen, mit dem Kerne mit erhöhter Festigkeit hergestellt werden können.

Diese Aufgabe wurde gelöst durch ein Bindemittelsystem umfassend: ein Resolharz, eine Base und Wasser gekennzeichnet dadurch, daß das Bindemittelsystem weiterhin mindestens ein aluminiumhaltiges Oxyanion und mindestens ein borhaltiges Oxyanion enthält.

Weiterhin stellt die Erfindung ein Verfahren zur Herstellung des erfindungsgemäßen Bindemittelsystems zur Verfügung, umfassend die Schritte: Bereitstellen eines Resolharzes und Mischen des Resolharzes mit Base, Wasser und mindestens einem aluminiumhaltigen Oxyanion und mindestens einem borhaltigen Oxyanion.

Die Erfindung betrifft ebenfalls eine Formmasse umfassend Aggregate und eine wirksam bindende Menge von bis zu 10 Gew.-% bezogen auf das Gewicht der Aggregate des erfindungsgemäßen Bindemittelsystems.

Weiterhin wird ein Verfahren bereitgestellt zur Herstellung eines Gießformteils umfassend:
(1) Vermischen von Aggregaten mit dem erfindungsgemäßen Bindemittelsystem in einer bindenden Menge von bis zu 10 Gew.-%, bezogen auf die Menge der Aggregate;
(2) Einbringen des in Schritt (1) erhaltenen Gießgemischs in eine Form;
(3) Härten des Gießgemischs in der Form um eine selbsttragende Form zu erhalten; und
(4) anschließendes Entfernen des geformten Gießgemischs von Schritt (3) aus der Form und weiteres Härten, wodurch man ein hartes, festes, ausgehärtetes Gießformteil erhält.

Gegenstand der Erfindung ist zudem ein Verfahren zum Gießen eines Metalls, umfassend:
(1) Herstellung eines erfindungsgemäßen Gießformteils
(2) Gießen von Metall im flüssigem Zustand in oder um dieses Gießfomteil;
(3) Kühlen und Verfestigen des Metalls; und
(4) anschließendes Abtrennen des gegossenen Gegenstandes von dem Gießformteil.

Erfindungswesentlich ist die Kombination von bor- und aluminiumhaltigen Oxyanionen, wodurch die Bindemitteleigenschaften verbessert werden. Durch diese Maßnahme werden nicht nur die Endfestigkeiten positiv beeinflußt, sondern es steigen auch die Festigkeiten innerhalb der ersten beiden Stunden nach Kernherstellung schneller an. Zudem sind die mit den erfindungsgemäßen Bindemittelsystemen hergestellten Kerne resistenter gegen hohe Luftfeuchtigkeit und gegen Wasserschlichte.

Resolharze werden durch Kondensation einer Phenolkomponente und einer Aldehydkomponente hergestellt. Deren Herstellung ist seit langem bekannt und ist z. B. in A. Knop, W. Scheibe, Chemistry and Application of Phenolic Resins, Springer Verlag (1979) sowie in EP-A-0 323 096 beschrieben. Bevorzugt werden die in EP-A-0 323 096 beschriebenen Resolharze verwendet. Die bevorzugten Aldehyd-Resolharze bestehen hauptsächlich aus Molekülen, in denen die benachbarten Phenolgruppen über Methylenbrücken zwischen den ortho- und para-Positionen verknüpft sind, da diese Moleküle eine größere Anzahl von Komplexierungsstellen für Oxyanionen besitzen. Moleküle, in denen die Phenolgruppen über ortho-ortho-Methylenbrücken verknüpft sind, haben sehr wenige Komplexierungsstellen für Oxyanionen und es ist deshalb bevorzugt, daß der Gehalt solcher Moleküle gering ist oder daß keine solchen Moleküle in den Resolharzen enthalten sind. Um dieses Ziel zu erreichen, sollten in den Phenolgruppen alle verfügbaren Positionen, die in ortho-Stellung zu der phenolischen Hydroxygruppe sind, als Methylolat geschützt sein.

Als Phenolverbindungen eignen sich neben dem besonders bevorzugten Phenol auch substituierte Phenole wie z. B. Kresole oder Nonylphenol oder phenolische Verbindungen wie z. B. Bisphenol-A jeweils gegebenenfalls in Kombination mit Phenol.

Alle Aldehyde, die herkömmlich zur Herstellung von Resolharzen verwendet werden, können im Rahmen der Erfindung eingesetzt werden. Beispiele hierfür sind Formaldehyd, Butyraldehyd oder Glyoxal. Besonders bevorzugt ist Formaldehyd.

Die Resolharze werden bevorzugt durch Kondensation der Phenolkomponente und des Aldehyds in Gegenwart eines basischen Katalysators, wie Ammoniumhydroxid oder eines Alkalimetallhydroxids, hergestellt. Bevorzugt werden Alkalimetallhydroxid-Katalysatoren verwendet.

Das Molverhältnis von Aldehyd (gegeben als Formaldehyd) zu Phenol in dem Resolharz kann im Bereich von 1 : 1 bis 3 : 1 schwanken, ist aber bevorzugt im Bereich von 1,6 : 1 bis 2,5 : 1.

Im Rahmen dieser Erfindung werden sauerstoffhaltige Anionen als Oxyanionen bezeichnet. Das Wesen dieser Erfindung ist, daß das Bindemittelsystem sowohl aluminiumhaltige Oxyanionen als auch borhaltige Oxyanionen enthält.

Geeignete aluminiumhaltige Oxyanionen sind z. B. Aluminate und geeignete borhaltige Oxyanionen sind Borate.

Die borhaltigen und aluminiumhaltigen Oxyanionen können direkt in Form ihrer Salze eingesetzt werden. Die Salze enthalten vorzugsweise Alkali- oder Erdalkalimetalle als Kation, wobei besonders Natrium- und Kaliumsalze wegen ihrer leichten Verfügbarkeit bevorzugt sind. Es ist aber ebenfalls möglich die Oxyanionen in situ herzustellen. So bilden sich Aluminate beim Auflösen von Aluminiumverbindungen wie z. B. Aluminiumhydroxid oder Aluminiumalkoholaten in Lauge. Aluminiumalkoholate weisen die Formel Al(OR)₃ auf, wobei R ein gesättigter oder ungesättigter, verzweigter oder unverzweigter Kohlenwasserstoffrest mit 1-10 Kohlenstoffatomen sein kann. Eine Lösung einer Borverbindung wie z. B. Borsäure oder Borsäureester in Lauge eignet sich als Lösung des borhaltigen Oxyanions. Als Lauge dient bevorzugt die Lösung einer Base in Wasser, die ebenfalls zum Mischen mit dem Resolharz verwendet wird.

Das Atomverhältnis Al : B der bor- und aluminiumhaltigen Oxyanionen wird im erfindungsgemäßen Bindemittelsystem bevorzugt im Bereich von 0,05 : 1 bis 1 : 1 variiert. In diesem Bereich werden mit dem erfindungsgemäßen Bindemittelsystem Kerne erhalten, die besonders gute Festigkeiten aufweisen.

Der besonders bevorzugte Bereich liegt zwischen 0,1 : 1 und 0,8 : 1. Das Verhältnis der Summe der Bor- und Aluminiumatome in den borhaltigen Oxyanionen und aluminiumhaltigen Oxyanionen zu der Anzahl der Phenolgruppen des Resolharzes beträgt bevorzugt zwischen 0,1 : 1,0 und 1,0 : 1,0, besonders bevorzugt zwischen 0,3 : 1,0 und 0,6 : 1,0.

Als Base werden bevorzugt Alkalihydroxide wie z. B. Natriumhydroxid und Kaliumhydroxid verwendet. Das molare Verhältnis von Hydroxidionen zu der Phenolgruppe im Bindemittelsystem beträgt bevorzugt 0,5 : 1 bis 3,0 : 1. Neben den bereits erwähnten Bestandteilen enthält das erfindungsgemäße Bindemittelsystem Wasser, bevorzugt in einer Menge von 25 - 50 Gew.-% bezogen auf das Gewicht der Zusammensetzung. Das Wasser dient zum Lösen der Base und ggf. der Oxyanionen. Außerdem soll es dem Bindemittel eine anwendungsgerechte Viskosität von 100 - 700 mPa•s verleihen, damit beim Mischen mit dem Aggregat eine gleichmäßige Umhüllung gewährleistet ist. Die Viskosität wird mit Hilfe eines Brookfield-Rotationsviskosimeters bestimmt.

Desweiteren kann das erfindungsgemäße Bindemittelsystem bis zu 25 Gew.-% konventionelle Zusätze wie Alkohole, Glykole und Silane enthalten.

Das Bindemittelsystem wird hergestellt, in dem das Resolharz mit der Base, dem Wasser und den Oxyanionen vermischt wird. Es ist möglich, zunächst das Resolharz mit einer wäßrigen Lösung der Base zu vermischen und anschließend die Oxyanionen, z. B. als Feststoff oder ebenfalls in Form einer wäßrigen Lösung, unterzumischen. Es ist ebenfalls möglich, zunächst die Oxyanionen mit zumindest einem Teil der Base und zumindest einem Teil des Wassers zu vermischen und diese Mischung mit dem Resolharz vermengen. Anschließend wird ggf. die restliche Base und ggf. das restliche Wasser zugemischt.

Das erfindungsgemäße Bindemittelsystem kann in Kombination mit Aggregaten zum Herstellen von Formmassen verwendet werden, die für die Herstellung von Gießformteilen eingesetzt werden. Die Gießformteile werden z. B. beim Gießen von Metall eingesetzt. Die hierbei verwendeten Aggregate und die eingesetzten Verfahrensschritte sind konventionell und z. B. aus EP-A-0 183 782 bekannt. Das Bindemittelsystem wird mit Sand oder einem ähnlichen Aggregat gemischt, um eine Formmasse herzustellen. Die Formmasse enthält eine wirksam bindende Menge von bis zu 10 Gew.-% des erfindungsgemäßen Bindemittelsystems bezogen auf das Gewicht der Aggregate. Verfahren um eine gleichmäßige Mischung des Bindemittelsystems und des Aggregates zu erzielen sind dem Fachmann bekannt. Die Mischung kann zusätzlich gegebenenfalls andere konventionelle Zutaten, wie Eisenoxid, gemahlene Flachs- oder Holzfasern, Pech und mineralische Additive, enthalten. Um Gießformteile aus Sand herzustellen, sollte das Aggregat eine genügend große Partikelgröße aufweisen. Dadurch besitzt das Gießformteil eine ausreichende Porosität und flüchtige Verbindungen können während des Gießvorgangs entweichen. Die durchschnittliche Partikelgröße des Aggregates liegt im allgemeinen zwischen 200 und 400 µm.

Für Standard-Gießformteile wird bevorzugt Sand als Aggregatmaterial verwendet, wobei zumindest 70 Gew.-% und bevorzugt mehr als 80 Gew.-% des Sandes Siliciumdioxid sind. Zirkon-, Olivin- und Chromitsand eignen sich ebenfalls als Aggregatmaterialien.

Das Aggregatmaterial stellt den Hauptbestandteil bei Gießformteilen. In Gießformteilen aus Sand für Standardanwendungen beträgt der Anteil des Bindemittels im allgemeinen bis zu 10 Gew.-%, häufig zwischen 0,5 und 7 Gew.-%, bezogen auf das Gewicht des Aggregates. Besonders bevorzugt werden 0,6 bis 5 Gew.-% Bindemittel bezogen auf das Gewicht des Aggregates verwendet.

Das Gießformteil wird gehärtet, so daß es seine äußere Form nach der Entfernung der Gießform behält. Konventionelle flüssige oder gasförmige Härtungssysteme können zum Härten des ertindungsgemäßen Bindemittelsystems verwendet werden.

So kann z. B. gasförmiges CO₂ durch das Gießteil geleitet werden. Es ist aber gleichermaßen die Kalthärtung mit einem flüssigen Katalysator möglich. Beispiele sind die vom Wasserglas-Ester und Resol-Ester Verfahren her bekannten Essigsäure- und Kohlensäureester. Nach dem Entfernen aus der Form wird in an sich bekannter Weise das Gießformteil durch weiteres Härten in den Endzustand überführt.

Die Erfindung wird durch die nachfolgenden Beispiele weiter erläutert.

### Beispiele

Alle Mengenangaben sind, soweit nicht anders erwähnt, in, Gewichtsteilen angegeben.

### 1. Aluminathaltige Resole durch nachträgliche Zugabe von Al-Verbindungen zu einem handelsüblichen borathaltigen Resol-CO₂-Bindemittel

### 1.1 Herstellung der Bindemittel

Unter gutem Rühren werden die in Tabelle I aufgeführten Mengen Aluminiumhydroxid bzw. Aluminiumtriisopropylat als Feststoff zu einem handelsüblichen borathaltigem Resol-CO₂-Bindemittel (Novanol 140; molares Verhältnis Bor : Phenol 0,28 : 1; enthält Kalilauge; Ashland-Südchemie-Kernfest GmbH) bei einer Temperatur von 40 - 50°C gegeben. Es wird solange weitergerührt, bis eine homogene Lösung entstanden ist.

**Tabelle I**

| | nicht erfindungsgemäß | erfindungsgemäß | | | |
|---|---|---|---|---|---|
| Bindemittel Nr. | 1.1 | 1.2 | 1.3 | 1.4 | 1.5 |
| Novanol 140^{a} | 100 | 100 | 100 | 100 | 100 |
| Aluminiumhydroxid^{b} | - | 2 | - | - | - |
| Aluminiumtriisopropylat^{c} | - | - | 2 | 3 | 4 |
| Al : B | - | 0.4 : 1 | 0,15 : 1 | 0,23 : 1 | 0,3 : 1 |

| | | | | | |
|---|---|---|---|---|---|
| ^{a}Ashland-Südchemie-Kernfest GmbH | | | | | |
| ^{b}Martinal ON, Martinswerk GmbH | | | | | |
| ^{c}Merck KGaA | | | | | |

### 1.2 Herstellung und Prüfung der Formstoff-/Bindemittel-Gemische

Zu 100 Gewichtsteilen Quarzsand H32 (Quarzwerke GmbH, Frechen) werden jeweils 2,5 Gewichtsteile der in Tabelle I aufgeführten Bindemittel zugegeben und in einem Labormischer intensiv vermischt. Mit diesen Gemischen werden Prüfkörper nach DIN 52 401 hergestellt, die durch Begasen mit CO₂ (30 Sekunden, 2 Liter CO₂ pro Minute) ausgehärtet werden.

Die Festigkeiten der Probekörper werden nach der "Georg Fischer"-Methode ermittelt. Dabei wird die Biegefestigkeit der Probekörper 30 Sekunden nach ihrer Herstellung (Sofortfestigkeiten) sowie nach einer halben, einer, zwei und 24 Stunden geprüft. Zur Ermittlung der Resistenz gegen hohe Luftfeuchtigkeit werden die Kerne jeweils unmittelbar nach ihrer Herstellung in eine Feuchtekammer (98% rel. Feuchte) gelegt und 24 Stunden darin gelagert. Anschließend erfolgt die Festigkeitsprüfung. Bei der Bestimmung der Wasserschlichtestabilität wird wie folgt vorgegangen:

Die Kerne werden 10 Minuten nach ihrer Herstellung 3 Sekunden lang in Wasserschlichte Miratec W3 (Ashland-Südchemie-Kernfest GmbH) getaucht, anschließend 30 Minuten bei Raumtemperatur und dann 30 Minuten lang bei 150°C in einem Umluftofen getrocknet. Nach dem Erkalten der Kerne werden die Biegefestigkeiten überprüft.

Die Ergebnisse sind in Tabelle II aufgeführt.

**Tabelle II**

| | nicht erfindungsgemäß | erfindungsgemäß | | | |
|---|---|---|---|---|---|
| Bindemittel Nr. | 1.1 | 1.2 | 1.3 | 1.4 | 1.5 |
| Biegefestigkeit (N/cm²) | | | | | |
| sofort | 100 | 100 | 100 | 100 | 90 |
| 0,5 h | 120 | 160 | 150 | 160 | 140 |
| 1 h | 140 | 170 | 160 | 180 | 160 |
| 2 h | 150 | 180 | 180 | 190 | 170 |
| 24 h | 170 | 200 | 210 | 210 | 210 |
| 24 h (98 % rel. Feuchte) | 100 | 140 | 140 | 140 | 150 |
| Wasserschlichte | 110 | 180 | 150 | 150 | 140 |

Aus Tabelle II erkennt man:
- die erfindungsgemäßen Bindemittel (Nr. 1.2 bis 1.5) erreichen bereits nach 2 Stunden Lagerung mindestens das Festigkeitsniveau, das der unmodifizierte Bindemittel (Nr. 1.1) erst nach 24 Stunden erreicht. Die Festigkeiten der modifizierten Bindemittel steigen danach noch weiter an.
- Die Wasserschlichtenbeständigkeit und die Resistenz gegen hohe Luftfeuchtigkeit wird durch die Modifizierung mit Aluminiumverbindungen wesentlich verbessert.

### 2. Aluminathaltige Resole durch Vorlösen der Aluminiumverbindungen in wäßriger Kalilauge und Zugabe dieser Lösung zu einem Phenolharz

### 2.1 Herstellung der Bindemittel

Bei der Herstellung des Handelsprodukts Novanol 140 werden dem Produkt nach der Kondensation des Resolharzes ca. 11,5 Gewichtsteile 50%ige Kalilauge zugegeben.

Es werden die in Tabelle III aufgeführten Mengen Aluminiumhydroxid in 11,5 Gewichtsteilen 50%iger Kalilauge gelöst. Diese Lösung wird anschließend an Stelle der reinen Kalilauge bei der Herstellung von Novanol 140 verwendet, um den Einfluß des Herstellungsverfahrens auf die Eigenschaften des Bindemittelsystems zu untersuchen. Die übrigen Zutaten wie z. B. Borat und ihre Mengen werden nicht verändert.

Zum Lösen des Aluminiumhydroxides wird die Kalilauge unter gutem Rühren auf ca. 95°C erwärmt und so lange bei dieser Temperatur gehalten, bis eine homogene Lösung entstanden ist. Die Zugabe der Aluminat-Lösung zum Phenolharz erfolgt bei ca. 60°C, um eine Phasentrennung bzw. ein Auskristallisieren zu vermeiden.

**Tabelle III**

| | nicht erfindungsgemäß | erfindungsgemäß | | |
|---|---|---|---|---|
| Bindemittel Nr. | 1.1^{a} | 2.1 | 2.2 | 2.3 |
| Phenolharz-Lösung | 88,5 | 88,5 | 88,5 | 88,5 |
| 50 %ige KOH-Lösung | 11,5 | 11,5 | 11,5 | 11,5 |
| Aluminiumhydroxid^{b,c} | - | 1.0 | 2.0 | 3.0 |
| Al : B | - | 0,2 : 1 | 0,4 : 1 | 0,6 : 1 |

| | | | | |
|---|---|---|---|---|
| ^{a}Novanol 140, Ashland-Südchemie-Kernfest GmbH | | | | |
| ^{b}Jeweils in der Kalilauge vorgelöst ^{c}Martinal ON, Martinswerke GmbH | | | | |

### 2.2 Herstellung und Prüfung der Formstoff-/Bindemittel-Gemische

Beides erfolgte entsprechend dem unter 1.2 beschriebenen Verfahren.

Die Ergebnisse sind in Tabelle IV aufgeführt. Der Vergleich von Tabelle II und IV zeigt, daß die aluminiumhaltigen Bindemittel die gleichen Vorteile aufweisen, unabhängig davon, ob die Aluminiumverbindung dem Bindemittel in fester Form oder in wäßriger Kalilauge vorgelöst zugegeben wird.

**Tabelle IV**

| | nicht erfindungsgemäß | erfindungsgemäß | | |
|---|---|---|---|---|
| Bindemittel Nr. | 1.1 | 2.1 | 2.2 | 2.3 |
| Biegefestigkeit (N/cm²) | | | | |
| sofort | 100 | 110 | 110 | 90 |
| 0,5 h | 120 | 140 | 160 | 140 |
| 1 h | 140 | 160 | 160 | 150 |
| 2 h | 150 | 170 | 170 | 160 |
| 24 h | 170 | 200 | 210 | 200 |
| 24 h (98 % rel. Feuchte) | 100 | 120 | 150 | 140 |
| Wasserschlichte | 110 | 130 | 150 | 150 |

### 3. Vergleichsversuch: Vollständiger Ersatz von Borat durch Aluminat

### 3.1 Herstellung des Bindemittels

Zu Vergleichszwecken werden zwei Bindemittel hergestellt, die eine identische Zusammensetzung wie Novanol 140 aufweisen, außer daß Borat vollständig durch Aluminat ersetzt ist. Die Herstellung der beiden Vergleichsharze erfolgte durch Vorlösen von Aluminiumhydroxid in 50 %iger Kalilauge wie unter 2.1 beschrieben. Die Aluminat : Phenol-Molverhältnisse sind in Tabelle V aufgeführt.

**Tabelle V**

| | | | |
|---|---|---|---|
| Bindemittel Nr. | 1.1^{a} | 3.1 | 3.2 |
| B : P | 0,28 | - | - |
| Al : P | - | 0,14 | 0,28 |

| | | | |
|---|---|---|---|
| ^{a}Novanol 140, Ashland-Südchemie-Kernfest GmbH | | | |

### 3.2 Herstellung und Prüfung der Formstoff-/Bindemittel-Gemische

Die Herstellung und Prüfung der Formstoff-/Bindemittel-Gemische erfolgt entsprechend dem unter 1.2 beschriebenen Verfahren. Die Ergebnisse sind in Tabelle VI aufgeführt.

**Tabelle VI**

| | | | |
|---|---|---|---|
| Bindemittel Nr. | 1.1 | 3.1 | 3.2 |
| Biegefestigkeit (N/cm²) | | | |
| sofort | 90 | -^{a} | 10 |
| 0,5 h | 120 | - | 20 |
| 1 h | 130 | - | 20 |
| 2 h | 150 | - | 20 |
| 24 h | 170 | - | 20 |
| 24 h (98 % ret. Feuchte) | 110 | - | 20 |
| Wasserschlichte | 110 | - | - |

| | | | |
|---|---|---|---|
| ^{a}Keine Kerne herstellbar | | | |

Aus Tabelle VI erkennt man, daß die alleinige Verwendung von Aluminat als Oxyanion allenfalls zu Kernen mit einem sehr geringen Festigkeitsniveau führt.

## Patentansprüche

1. Bindemittelsystem umfassend:
(a) ein Resolharz,
(b) eine Base und
(c) Wasser
**gekennzeichnet dadurch, daß** das Bindemittelsystem weiterhin mindestens ein aluminiumhaltiges Oxyanion und mindestens ein borhaltiges Oxyanion enthält.

2. Bindemittelsystem nach Anspruch 1, wobei das aluminiumhaltige Oxyanion Aluminat ist und/oder das borhaltige Oxyanion Borat ist.

3. Bindemittelsystem nach Anspruch 1 oder 2, wobei das aluminiumhaltige Oxyanion als Lösung einer Aluminiumverbindung in Lauge und/oder das borhaltige Oxyanion als Lösung einer Borverbindung in Lauge vorliegt.

4. Bindemittelsystem nach einem der Ansprüche 1 bis 3, wobei das Atomverhältnis von Aluminium zu Bor zwischen 0,05 : 1 und 1 : 1 beträgt.

5. Bindemittelsystem nach einem der Ansprüche 1 bis 4, wobei das Verhältnis der Anzahl der Bor- und Aluminiumatome in den borhaltigen Oxyanionen und aluminiumhaltigen Oxyanionen zu der Anzahl der Phenolgruppen des Resolharzes zwischen 0,1 : 1,0 und 1,0 : 1,0 beträgt.

6. Verfahren zur Herstellung eines Bindemittelsystems umfassend die Schritte:
(1) Bereitstellen eines Resolharzes;
(2) Mischen des Resolharzes mit Base, Wasser und mindestens einem aluminiumhaltigen Oxyanion und mindestens einem borhaltigen Oxyanion.

7. Verfahren zur Herstellung eines Bindemittelsystems nach Anspruch 6, wobei das Resolharz zuerst mit einer wäßrigen Lösung der Base vermischt wird und anschließend die Oxyanionen zu der Mischung zugegeben werden.

8. Verfahren zur Herstellung eines Bindemittelsystems nach Anspruch 6, wobei zunächst eine Mischung, umfassend die Oxyanionen, zumindest einen Teil der Base und zumindest einen Teil des Wassers, mit dem Resolharz vermischt wird und anschließend ggf. die restliche Base und ggf. das restliche Wasser zugemischt werden.

9. Formmasse umfassend Aggregate und eine wirksam bindende Menge von bis zu 10 Gew.- %, bezogen auf das Gewicht der Aggregate, eines Bindemittelsystems nach einem der Ansprüche 1 bis 5.

10. Verfahren zur Herstellung eines Gießformteils umfassend:
(1) Vermischen von Aggregaten mit dem Bindemittelsystem nach einem der Ansprüche 1 bis 5 in einer bindenden Menge von bis zu 10 Gew.-%, bezogen auf die Menge der Aggregate;
(2) Einbringen des in Schritt (1) erhaltenen Gießgemischs in eine Form;
(3) Härten des Gießgemischs in der Form um eine selbsttragende Form zu erhalten; und
(4) anschließendes Entfernen des geformten Gießgemischs von Schritt (3) aus der Form und weiteres Härten, wodurch man ein hartes, festes, ausgehärtetes Gießformteil erhält.

11. Verfahren nach Anspruch 10, bei dem das Gießgemisch gehärtet wird durch Behandeln des Gießgemischs mit gasförmigen Kohlendioxid.

12. Verfahren nach Anspruch 10, bei dem das Gießgemisch gehärtet wird durch Zumischen eines Essigsäureesters oder Kohlensäureesters zum Gießgemisch.

13. Verfahren zum Gießen eines Metalls, umfassend:
Herstellung eines Gießformteils nach einem der Ansprüche 10 bis 12
(1) Gießen von Metall im flüssigem Zustand in oder um dieses Gießformteil;
(2) Kühlen und Verfestigen des Metalls; und
(3) anschließendes Abtrennen des gegossenen Gegenstandes von dem Gießformteil.

## Claims

1. A binder system comprising:
(a) a resol resin,
(b) a base, and
(c) water
**characterized in that** said binder system further contains at least one aluminium-containing oxy anion and at least one boron-containing oxy anion.

2. The binder system as claimed in claim 1, wherein said aluminium-containing oxy anion is aluminate and/or said boron-containing oxy anion is borate.

3. The binder system as claimed in claim 1 or 2, wherein said aluminium-containing oxy anion is present as a basic solution of an aluminium compound and/or said boron-containing oxy anion is present as a basic solution of a boron compound.

4. The binder system as claimed in any of claims 1 to 3, wherein the atomic ratio of aluminium to boron is between 0.05:1 and 1:1.

5. The binder system as claimed in any of claims 1 to 4, wherein the ratio of the number of boron atoms and aluminium atoms in said boron-containing oxy anions and said aluminium-containing oxy anions to the number of phenol groups of said resol resin is between 0.1:1.0 and 1.0:1.0.

6. A process for preparing a binder system comprising the steps of:
(1) providing a resol resin;
(2) blending said resol resin with base, water and at least one aluminium-containing oxy anion and at least one boron-containing oxy anion.

7. The process for preparing a binder system as claimed in claim 6, wherein said resol resin is first mixed with an aqueous solution of said base and the oxy anions are then added to the mixture.

8. The process for preparing a binder system as claimed in claim 6, wherein a mixture comprising said oxy anions, at least part of said base and at least part of the water is first mixed with said resol resin and, if required, the remainder of said base and of water is then admixed therewith.

9. A molding material comprising aggregates and an effectively binding amount of up to 10% by weight, based on the weight of said aggregates, of a binder system as claimed in any of claims 1 to 5.

10. A process for preparing a cast molding comprising
(1) blending aggregates with the binder system as claimed in any of claims 1 to 5 in a binding amount of up to 10% by weight, based on the amounts of said aggregates;
(2) introducing the casting composition obtained in step (1) into a mold;
(3) curing the casting composition in said mold to obtain a self-supporting molding; and
(4) subsequently removing the molded casting composition of step (3) from the mold and further curing to give a hard, solid, cured cast molding.

11. The process as claimed in claim 10, wherein said casting composition is cured by treating said casting composition with gaseous carbon dioxide.

12. The process as claimed in claim 10, wherein said casting composition is cured by admixing an acetic acid ester or carbonic acid ester with said casting composition.

13. A process for casting metal comprising
preparing a cast molding as claimed in any of claims 10 to 12
(1) pouring metal in liquid state into or around said cast molding;
(2) cooling and solidifying said metal; and
(3) subsequently separating the cast article from the cast molding.

## Revendications

1. Système de liant, comprenant :
(a) un résol,
(b) une base, et
(c) de l'eau
**caractérisé en ce que** le système liant contient par ailleurs au moins un oxyanion contenant de l'aluminium et au moins un oxyanion contenant du bore.

2. Système de liant selon la revendication 1, où l'oxyanion contenant de l'aluminium est un aluminate et/ou l'oxyanion contenant du bore est un borate.

3. Système de liant selon la revendication 1 ou 2, où l'oxyanion contenant de l'aluminium est présent sous la forme d'une solution d'un composé de l'aluminium dans une lessive alcaline et/ou l'oxyanion contenant du bore est présent sous la forme d'une solution d'un composé du bore dans une lessive alcaline.

4. Système de liant selon l'une quelconque des revendications 1 à 3, où le rapport atomique de l'aluminium au bore se situe entre 0,05:1 et 1:1.

5. Système de liant selon l'une quelconque des revendications 1 à 4, où le rapport du nombre d'atomes de bore et d'aluminium dans les oxyanions contenant du bore et les oxyanions contenant de l'aluminium au nombre de radicaux phénol du résol se situe entre 0,1:1,0 et 1,0:1,0.

6. Procédé de préparation d'un système de liant comprenant les étapes consistant à :
(1) préparer un résol ;
(2) mélanger le résol avec la base, l'eau et au moins un oxyanion contenant de l'aluminium et au moins un oxyanion contenant du bore.

7. Procédé de préparation d'un système de liant selon la revendication 6, où le résol est d'abord mélangé avec une solution aqueuse de la base et ensuite, on ajoute les oxyanions au mélange.

8. Procédé de préparation d'un système de liant selon la revendication 6, où on mélange d'abord, un mélange comprenant les oxyanions, au moins une partie de la base et au moins une partie de l'eau, au résol et ensuite, on mélange le cas échéant, la base résiduelle et le cas échéant, l'eau résiduelle.

9. Matière à mouler comprenant des agrégats et une quantité active comme liant de jusqu'à 10% en poids, sur base du poids des agrégats, d'un système de liant selon l'une quelconque des revendications 1 à 5.

10. Procédé de préparation d'une partie de moule pour coulée, comprenant les étapes consistant à :
(1) mélanger les agrégats avec le système de liant selon l'une quelconque des revendications 1 à 5, en une quantité liante de jusqu' à 10% en poids sur base de la quantité des agrégats ;
(2) incorporation du mélange de coulée obtenu à l'étape (1) dans un moule ;
(3) durcissement du mélange de coulée dans le moule pour obtenir un moule autoporteur, et
(4) ensuite, élimination du mélange de coulée mis en forme de l'étape (3) du moule et durcissement supplémentaire, où on obtient une partie de moule pour coulée durci, solide, dur.

11. Procédé selon la revendication 10, dans lequel le mélange de coulée est durci par traitement du mélange de coulée avec du dioxyde de carbone gazeux.

12. Procédé selon la revendication 10, dans lequel le mélange de coulée est durci par mélange d'un ester d'acide acétique ou d'un ester d'acide carbonique au mélange de coulée.

13. Procédé pour couler un métal, comprenant les étapes consistant à :
préparer une partie de moule pour coulée selon l'une quelconque des revendications 10 à 12,
(1) couler le métal à l' état liquide dans ou autour de cette partie de moule pour coulée ;
(2) refroidir et renforcer le métal, et
(3) ensuite, séparer l'objet coulé de la partie du moule pour couler.
